# EUROPÄISCHE PATENTANMELDUNG

(11) **EP 3 542 933 A1**
(43) Veröffentlichungstag der Anmeldung: **25.09.2019**
(21) Anmeldenummer: 19161519.4
(22) Anmeldetag: 08.03.2019
(51) Int. Cl.: B23B 5/12, B21C 43/02

(54) **WERKZEUG ZUM BEARBEITEN LÄNGLICHER METALLGEGENSTÄNDE DURCH SPANABHEBENDES ÜBERDREHEN**

(30) Priorität: 20.03.2018 DE 102018106470
(71) Anmelder: LEISTRITZ PRODUKTIONSTECHNIK GMBH, 92714 Pleystein (DE)
(72) Erfinder: Vater, Bernhard, 92714 Pleystein (DE); Schwarz, Wolfgang, 90482 Nürnberg (DE)
(74) Vertreter: Lindner Blaumeier Patent- und Rechtsanwälte

(57) **Zusammenfassung**

Werkzeug zum Bearbeiten länglicher Metallgegenstände (2) durch spanabhebendes Überdrehen, gekennzeichnet durch einen Werkzeughalter (3) mit einer Schneidwerkzeugaufnahme (4) und ein darin lösbar einsetz- und befestigbares Schneidwerkzeug (5) mit einem plattenförmigen Werkzeugkörper (11) mit einer zentralen Bohrung (12) und wenigstens einer in diese ragenden Schneide (13), wobei am Werkzeughalter (3) und am Schneidwerkzeug (5) zusammenwirkende Spann- und Justiermittel (9) zum axialen Spannen des Schneidwerkzeugs (5) gegen einen in der Schneidwerkzeugaufnahme (4) vorgesehenen Plattensitz (10) und zum Justieren des Schneidwerkzeugs (5) durch radiales Verschieben des Schneidwerkzeugs (5) relativ zum Werkzeughalter (3) vorgesehen sind.

## Beschreibung

Die Erfindung betrifft ein Werkzeug zum Bearbeiten länglicher Metallgegenstände durch spanabhebendes Überdrehen.

Mitunter sind längliche Metallgegenstände oberflächlich durch spanabhebendes Überdrehen zu bearbeiten, um einerseits den gewünschten Durchmesser, andererseits die gewünschte Oberflächenbeschaffenheit bzw. Oberflächengüte herzustellen. Ein Beispiel für derartige längliche Metallteile sind Stecker bzw. Kontaktstifte für elektrische Steckverbindungen. Diese Stecker bzw. Kontaktstifte sind mitunter sehr dünn, sie weisen häufig einen Durchmesser von nur wenigen Millimetern auf. Zum Überdrehen werden die länglichen Metallgegenstände bisher auf einer Drehbank bearbeitet. Der eingespannte Metallgegenstand rotiert, das Überdrehen wird mit einem seitlich an den Metallgegenstand herangefahrenen und längs des Metallgegenstands bewegten Drehwerkzeugs vorgenommen. Hierbei ist extrem vorsichtig zu agieren, da bei zu hohem seitlichen Druck durch das Drehwerkzeug die Gefahr des seitlichen Ausbiegens des Metallgegenstands besteht. Dieses Problem ist umso größer, je dünner der Metallgegenstand ist.

Der Erfindung liegt das Problem zugrunde, ein Werkzeug zum Bearbeiten solcher Metallgegenstände anzugeben, das ein einfaches und sicheres Überdrehen eines länglichen Metallteils ermöglicht.

Ein derartiges Werkzeug zum Bearbeiten länglicher Metallgegenstände durch spanabhebendes Überdrehen ist gekennzeichnet durch einen Werkzeughalter mit einer Schneidwerkzeugaufnahme und ein darin lösbar einsetz- und befestigbares Schneidwerkzeug mit einem plattenförmigen Werkzeugkörper, mit einer zentralen Bohrung und wenigstens einer in diese ragenden Schneide, wobei am Werkzeughalter und am Schneidwerkzeug zusammenwirkende Spann- und Justiermittel zum axialen Spannen des Schneidwerkzeugs gegen einen in der Schneidwerkzeugaufnahme vorgesehenen Plattensitz und zum Justieren des Schneidwerkzeugs durch radiales Verschieben des Schneidwerkzeugs relativ zum Werkzeughalter vorgesehen sind.

Das erfindungsgemäße Werkzeug zeichnet sich dadurch aus, dass der Metallgegenstand durch das Schneidwerkzeug hindurchbewegt und dabei über die eine oder die mehreren Schneiden bearbeitet wird. Hierzu weist das erfindungsgemäße Werkzeug einen Werkzeughalter auf, der eine im Wesentlichen topfartige Schneidwerkzeugaufnahme aufweist, also eine entsprechende zylindrische Bohrung, in die lösbar ein Schneidwerkzeug mit einem plattenförmigen oder scheibenförmigen Werkzeugkörper eingesetzt und darin fixiert werden kann. Der Werkzeugkörper weist eine zentrale Bohrung auf, durch die der Metallgegenstand geführt wird. In diese Bohrung ragt wenigstens eine Schneide, bevorzugt jedoch mehrere symmetrisch um den Umfang verteilte Schneiden, die gemeinsam am Metallgegenstand angreifen und diesen gleichzeitig auch führen. Das heißt, dass der Metallgegenstand in den Werkzeughalter respektive den Werkzeugkörper eintaucht und dabei überdreht wird.

Um ein hochpräzise Überdrehen zu ermöglichen, sind für eine entsprechende sichere Verspannung des Schneidwerkzeugs in der Schneidwerkzeugaufnahme und eine exakte Justierung des Schneidwerkzeugs relativ zum Metallgegenstand entsprechende Spann- und Justiermittel am Werkzeughalter sowie am Schneidwerkzeug vorgesehen. Die Spannmittel sind dabei derart ausgebildet, dass sie ein festes axiales Verspannen des Schneidwerkzeugs gegen einen in der Schneidwerkzeugaufnahme vorgesehenen Plattensitz ermöglichen. Hierdurch ist eine Relativbewegung des Schneidwerkzeugs zum Werkzeughalter ausgeschlossen. Die entsprechende, zu verspannende Position kann über die entsprechenden Justiermittel exakt eingestellt werden, die derart ausgelegt sind, dass das Schneidwerkzeug radial relativ zum Werkzeughalter verschoben werden kann. Dies ermöglicht ein hochgenaues koaxiales Ausrichten des Schneidwerkzeugs relativ zum längsgebohrten Werkzeughalter durch radiales Verschieben des Schneidwerkzeugs, so dass ein exakter Rundlauf gegeben ist, wenn das Werkzeug an einem Maschinenantrieb angeordnet ist, mithin also rotiert, während bei der Bearbeitung der längliche Metallgegenstand nicht rotiert. Über die entsprechenden Spann- und Justiermittel ist also nach dem Einsetzen des Schneidwerkzeugs in die Schneidwerkzeugaufnahme zunächst eine hochgenaue Justierung des Schneidwerkzeugs relativ zum Werkzeughalter möglich und anschließend eine feste Arretierung des Schneidwerkzeugs in der justierten Position.

Zum Überdrehen wird das rotierende Werkzeug relativ zum positionsfesten Metallgegenstand bewegt, so dass dieser in die zentrale Bohrung des Schneidwerkzeugs eingefahren und dort über die eine oder die bevorzugt mehreren Schneiden entsprechend überdreht wird. Ist der Metallgegenstand weitgenug eingetaucht, also über die vorbestimmte Länge definiert bearbeitet, wird das Werkzeug und der Metallgegenstand wieder auseinander gefahren.

Wenngleich bevorzugt das Werkzeug rotiert und der Metallgegenstand nicht rotiert, kann die Anordnung natürlich auch umgekehrt sein. Das heißt, dass der Metallgegenstand mit einem maschinenseitigen Rotationsantrieb verbunden ist und sich dreht, während das Werkzeug positionsfest ist.

Ersichtlich kann mit dem erfindungsgemäßen Werkzeug ein weit besseres Überdrehen vorgenommen werden als bisher, da der Metallgegenstand in der zentralen Bohrung des Werkzeugkörpers abgestützt ist, insbesondere wenn, wie bevorzugt, mehrere Schneiden in die Bohrung ragen, so dass der Metallgegenstand an mehreren Schneiden abgestützt ist. Die Spann- und Justiermittel ermöglichen ein hochgenaues koaxiales Ausrichten des Schneidwerkzeugs relativ zum längsgebohrten Werkzeughalter wie auch eine sichere Festlegung der Justageposition, so dass Werkzeug und Metallgegenstand auch hochgenau relativ zueinander ausgerichtet werden können.

Eine besonders zweckmäßige Weiterbildung der Erfindung sieht vor, dass der eine Axialbohrung aufweisende Werkzeughalter eine axial versetzt in seinem Inneren vorgesehene zweite Schneidwerkzeugaufnahme und ein darin lösbar einsetz- und befestigbares zweites Schneidwerkzeug mit einem plattenförmigen Werkzeugkörper mit einer zentralen Bohrung und wenigstens einer in diese ragenden Schneide mit einem verglichen mit dem ersten Schneidwerkzeug kleineren Schneidradius aufweist, wobei am Werkzeughalter und am zweiten Schneidwerkzeug zusammenwirkende zweite Spann- und Justiermittel zum axialen Spannen des zweiten Schneidwerkzeugs gegen einen in der zweiten Schneidwerkzeugaufnahme vorgesehenen zweiten Plattensitz und zum Justieren des zweiten Schneidwerkzeugs durch radiales Verschieben des zweiten Schneidwerkzeugs relativ zum Werkzeughalter vorgesehen sind.

Gemäß dieser Erfindungsausgestaltung weist das erfindungsgemäße Werkzeug zwei separate Arbeits- oder Schneidebenen auf, nämlich zum einen die über das erste Schneidwerkzeug gebildete erste Ebene sowie eine axial versetzt hierzu angeordnete, durch das zweite Schneidwerkzeug gebildete zweite Ebene. Um beide Schneidwerkzeuge in der Schneidwerkzeugaufnahme anordnen zu können ist diese als entsprechend lange Axialbohrung im Werkzeughalter ausgeführt. Im Inneren des Werkzeughalters befindet sich ein zweiter Plattensitz, gegen den das zweite Schneidwerkzeug mit seinem platten- oder scheibenförmigen Werkzeugkörper mit entsprechenden zweiten Spannmitteln gespannt werden kann. Über entsprechende zweite Justiermittel kann das zweite Schneidwerkzeug ebenfalls hochgenau durch radiales Verschieben relativ zum Werkzeughalter justiert werden. Nach erfolgtem Einsetzen des zweiten Schneidwerkzeugs wird sodann das erste Schneidwerkzeug in entsprechender Weise eingesetzt und justiert und gegen den ersten Plattensitz verspannt.

Die beiden Schneidwerkzeuge unterscheiden sich in ihrem Schneidradius. Das erste Schneidwerkzeug weist dabei einen über die eine oder die mehreren in die zentrale Bohrung ragenden Schneiden definierten größeren Schneidradius aus als das zweite Schneidwerkzeug, das natürlich ebenfalls über eine oder bevorzugt mehrere in die zentrale Bohrung ragende Schneiden verfügt. Diese Erfindungsausgestaltung ermöglicht es, durch einen gemeinsamen Überdrehvorgang an einem länglichen Metallgegenstand zwei unterschiedliche Durchmesser aufweisende überdrehte Abschnitte auszubilden. Das heißt, dass beispielsweise an einem Kontaktstecker über das erste Schneidwerkzeug eine im Durchmesser etwas größerer zylindrischer Befestigungsabschnitt, mit dem der Kontaktstift in eine entsprechende Stiftaufnahme fixiert werden kann, ausgebildet werden kann, während über das zweite Schneidwerkzeug ein einen kleineren Durchmesser aufweisender zweiter Abschnitt ausgebildet werden kann, der beispielsweise der eigentliche Kontaktabschnitt ist. Beide Abschnitte gehen über eine entsprechende Stufe ineinander über. Hierfür ist lediglich ein einziger Arbeitsgang erforderlich, in dem der Metallgegenstand axial in das Werkzeug eingefahren wird, woraufhin er über die beiden Schneidwerkzeuge quasi simultan bearbeitet wird.

Am Werkzeughalter selbst ist zweckmäßigerweise wenigstens eine seitliche Spanaustragsöffnung vorgesehen, über die am ersten Schneidwerkzeug und, wenn vorgesehen, auch am zweiten Schneidwerkzeug anfallende Späne ausgetragen werden können. Der Werkezughalter, der bevorzugt eine axial durchgehende Bohrung aufweist, ist im Bereich dieser Bohrung seitlich geöffnet, um die Spanaustragsöffnung auszubilden. Diese axial durchgehende Bohrung kann sowohl bei nur einem Schneidwerkzeug vorgesehen sein, als auch bei zwei axial hintereinander angeordneten Schneidwerkzeugen. Bevorzugt ist die Spanaustragsöffnung als Längsschlitz ausgeführt.

Für die Justierung und Festlegung des ersten und, sofern vorgesehen, des zweiten Schneidwerkzeugs sind die ersten respektive zweiten Spann- und Justiermittel essentiell. Um die entsprechende Justierung und Verspannung zu ermöglichen, können gemäß einer zweckmäßigen Weiterbildung die ersten und/oder die zweiten Spann- und Justiermittel mehrere um den Umfang des Werkzeughalters verteilt angeordnete Schraubelemente sowie einen oder mehrere am ersten und/oder zweiten Schneidwerkzeug vorgesehene, mit den Schraubelementen zusammenwirkende Halteabschnitte umfassen. Durch die Anordnung der mehreren Schraubelemente, die um den Umfang des Werkzeughalters, zweckmäßigerweise natürlich symmetrisch, verteilt angeordnet sind, ist es möglich, auf einen oder mehrere entsprechende, an dem jeweiligen Schneidwerkzeug vorgesehene Halteabschnitte einzuwirken und durch entsprechende Betätigung der Schraubelemente die Justierung und Verspannung vorzunehmen. Dabei sind unterschiedliche Ausgestaltungen der Spann- und Justiermittel respektive der Schraubelemente sowie der Haltabschnitten denkbar.

Gemäß einer ersten Erfindungsalternative kann ein Halteabschnitt des Schneidwerkzeugs in Form einer umlaufenden, wenigstens eine kegelige Fläche, gegen die die Schraubelemente bewegt werden, aufweisende Nut vorgesehen sein, wobei diese Nut entweder über eine kegelige Umfangsfläche begrenzt sein kann oder über zwei kegelige Flächen, wobei die Nut dann als Prismanut ausgeführt ist. Die Schraubelemente, die in den entsprechenden Gewindebohrungen am Werkzeughalter eingeschraubt sind, greifen in diese Nut ein und können gegen die kegelige Fläche bewegt werden. Sind beispielsweise sechs solcher Schraubelemente vorgesehen, so können beispielsweise drei dieser Schraubelemente als Justierelemente und drei Schraubelemente als Spannelemente verwendet werden. Beispielsweise dient das erste, das dritte und das fünfte Schraubelement als Justierschraube, während das zweite, das vierte und das sechste Schraubelement als Spannschraube dient. Zur Montage werden beispielsweise zunächst die Spannschrauben leicht angezogen, so dass eine geringe Verspannung zum Plattensitz gegeben ist. Sodann können die Justierschrauben entsprechend betätigt werden, um das Schneidwerkzeug minimal um wenige Hundertstel oder Zehntel Millimeter in die gewünschte Richtung zu bewegen und eine hochgenaue koaxiale Ausrichtung zu erwirken. Diese erforderliche Ausrichtung kann über eine entsprechende Messeinrichtung, wie beispielsweise einen Taster oder dergleichen erfasst werden, so dass quasi während des Ausrichtens die Ausrichtungsgenauigkeit ermittelt werden kann. Nach erfolgter Justierung werden sodann die Spannschrauben festgezogen, so dass sich das Schneidwerkzeug in der justierten Position nicht mehr bewegen kann, es ist äußerst fest gegen den Plattensitz verspannt.

Alternativ zur Ausbildung des Halteabschnitts über eine umlaufende Kegelnut ist es auch denkbar, dass der Halteabschnitt über eine kegelige umlaufende Mantelfläche des Schneidwerkzeugs gebildet ist. Hier ist also keine separate Nut vorgesehen, vielmehr ist die Mantelfläche zumindest über einen gewissen axialen Abschnitt als Kegelfläche ausgeführt. Die Funktion ist die gleiche wie bezüglich der Kegelnut beschrieben.

Eine dritte Alternative hinsichtlich der Halteabschnittsausbildung sieht vor, mehrere Halteabschnitte auszubilden, die entsprechend äquidistant um den Umfang des Schneidwerkzeugs verteilt angeordnet sind und als lokale, wenigstens eine Schrägfläche aufweisende Eintiefungen gebildet sind. Hier ist also die umlaufende Nut über entsprechende lokale Eintiefungen, die entsprechende Schrägflächen, ähnlich der Kegelgeometrie der Nut, aufweisen, gebildet. Selbstverständlich entspricht die Anzahl der Halteabschnitte der Anzahl an vorgesehenen Spann- und Justierelementen, also der Anzahl an entsprechenden Spann- und Justierschrauben.

Als Schraubelemente kommen, wie ausgeführt, bevorzugt Schrauben zum Einsatz, insbesondere Madenschrauben, die in entsprechenden Gewindebohrungen am Werkzeughalter aufgenommen sind.

Eine vierte Alternative bezüglich der Halteabschnittsausgestaltung sieht vor, wiederum mehrere äquidistant um den Umfang angeordnete Halteabschnitte über lokale Eintiefungen auszubilden, wobei diese mit wenigstens einer Anlagefläche für das als Exzenterschraube ausgebildete Schraubelement gebildet sind, wobei zusätzliche Halteabschnitt in Form lokaler Eintiefungen vorgesehen sind, in die die der Justierung dienende Schraubelemente eingreifen. Die Justierung, also die Radialverschiebung erfolgt wiederum über entsprechende Schraubelemente, wobei auch hier entsprechende Madenschrauben verwendet werden können. Die axiale Verspannung gegen den Plattensitz erfolgt hier jedoch über entsprechende Exzenterschrauben. Diese sind in Gewindebohrungen am Werkzeughalter aufgenommen und greifen mit einem entsprechenden exzentrischen Spannabschnitt in eine lokale Eintiefung mit wenigstens einer Anlagefläche für diesen Spannabschnitt ein. Nach erfolgter Justierung über die Schraubelemente werden lediglich die Exzenterschrauben ein kurzes Stück verdreht, so dass der Spannabschnitt gegen die Anlagefläche läuft und über diese das Schneidwerkzeug gegen den Plattensitz gespannt wird. Auch hier können beispielsweise drei Justierschrauben und drei Exzenterschrauben vorgesehen sein, die wiederum äquidistant zueinander angeordnet sind, wobei die Justierschrauben und die Exzenterschrauben untereinander um jeweils 120° beabstandet sind.

In Weiterbildung der Erfindung kann vorgesehen sein, dass die oder jede Schneide (bevorzugt sind wie ausgeführt mehrere Schneiden vorgesehen) einen ersten achsparallelen Schneidabschnitt aufweist, der in einen schräg zur Achse verlaufenden zweiten Schneidabschnitt übergeht. Dies ermöglicht es, das eigentliche Überdrehen mit dem ersten achsparallelen Schneidabschnitt vorzunehmen, da dieser erste Schneidabschnitt parallel zur Zentralachse verläuft. Sodann weitet sich die Schneide im zweiten Schneidabschnitt geringfügig auf, wobei der zweite Schneidabschnitt bevorzugt unter einem Winkel unter 0,2 - 1° zur Achse verläuft. Durch diese Aufweitung greift folglich die Schneide in diesen zweiten Schneidabschnitt nicht mehr am Metallgegenstand an, der Schnitt erfolgt nur im ersten Schneidabschnitt, der relativ kurz ist. Dieses Aufweiten hat den Vorteil, dass die Schneide nicht zu lang ist und es nicht zu einem Verklemmen kommen kann. Gleichzeitig ist aber die Schneide bzw. der Werkzeugkörper selbst hinreichend dick und stabil.

Im ersten Schneidabschnitt können die entsprechenden Schnittkanten vorzugsweise mit einem Winkel bis zu 12° angeschliffen sein, wobei der Schliff in beliebiger Form ausgeführt sein kann. Durch entsprechende Ausgestaltung der Schneiden können diese, wenn axial hinreichend dick, nachgeschliffen werden.

Wie ausgeführt weist das erste und, sofern vorgesehen, auch das zweite Schneidwerkzeug bevorzugt mehrere um den Umfang der zentralen Bohrung verteilt angeordnete Schneiden auf, so dass der Metallgegenstand einerseits exakt in der jeweiligen Bohrung geführt und abgestützt ist und gleichzeitig auch der Spanabtrag an mehreren Stellen erfolgt.

Zweckmäßigerweise ist in Umfangsrichtung der oder jeder Schneide ein am Werkzeugkörper ausgebildeter Spanraum zugeordnet. Das heißt, dass benachbart zur jeweiligen Schneide die zentrale Bohrung lokal entsprechend aufgeweitet ist, so dass etwaige anfallende Späne in diesen Spanraum eintreten und über diesen, beispielsweise über die seitliche Spanaustragsöffnung, abgeführt werden können.

Eine zweckmäßige Weiterbildung der Erfindung sieht vor, dass am Werkzeughalter wenigstens ein erstes Zentrierelement und am Werkzeugkörper wenigstens ein zweites Zentrierelement für eine umfangsmäßige Zentrierung des Schneidwerkzeugs relativ zum Werkzeughalter vorgesehen ist. Über diese Zentrierelemente ist es möglich, das Schneidwerkzeug in einer definierten und zentrierten Position in den Werkzeughalter respektive die Schneidwerkzeugaufnahme einzusetzen und sodann entsprechend zu justieren und zu verspannen.

Dabei kann das erste Zentrierelement als radial in die Schneidwerkzeugaufnahme ragender Vorsprung und das zweite Zentrierelement als diese aufnehmende Ausnehmung ausgebildet sein, oder umgekehrt.

Neben dem Werkzeug selbst betrifft die Erfindung ferner ein Schneidwerkzeug für ein Werkzeug der vorstehend beschriebenen Art. Vorgesehen ist ein Schneidwerkzeug mit einem plattenförmigen Werkzeugkörper mit einer zentralen Bohrung und wenigstens einer in diese ragenden Schneide, sowie mit einem oder mehreren umfangsseitig am Werkzeugkörper ausgebildeten Halteabschnitten zum Zusammenwirken mit externen schraubenförmigen Spann- und Justiermitteln zum axialen Spannen und radialen Verschieben relativ zu einem Werkzeughalter.

Die Spann- und Justiermittel umfassen entsprechende Schraubelemente, vorzugsweise in Form von Schrauben wie Madenschrauben oder Exzenterschrauben, die am Werkzeughalter festzulegen sind, sowie einen oder mehrere entsprechende, am Werkzeugkörper vorgesehene Halteabschnitte, die mit den Schraubelementen zusammenwirken.

Bezüglich zweckmäßiger Ausgestaltungen des Schneidwerkzeugs wird auf die vorstehenden Ausführungen sowie auf die diesbezüglichen Unteransprüche verwiesen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Perspektivansicht eines erfindungsgemäßen Werkzeugs,
- Fig. 2: eine Seitenansicht des Werkzeugs aus Fig. 1, teilgeschnitten,
- Fig. 3: eine Perspektivansicht eines Schneidwerkzeugs,
- Fig. 4: eine Aufsicht auf das Schneidwerkzeug aus Fig. 3,
- Fig. 5: eine Schnittansicht durch das Schneidwerkzeug aus Fig. 3 längs der Linie V-V,
- Fig. 6: eine Seitenansicht des Schneidwerkzeugs aus Fig. 3,
- Fig. 7: eine Stirnseitenansicht des Werkzeugs aus Fig. 2,
- Fig. 8: eine Seitenansicht eines Werkzeugs, teilgeschnitten, mit einer zweiten Ausführungsform,
- Fig. 9: eine Stirnseitenansicht des Werkzeugs aus Fig. 8,
- Fig. 10: eine Seitenansicht, teilgeschnitten, eines Werkzeugs einer dritten Ausführungsform,
- Fig. 11: eine Stirnseitenansicht des Werkzeugs aus Fig. 10,
- Fig. 12: eine Perspektivansicht des Schneidwerkzeugs aus Fig. 11,
- Fig. 13: eine Seitenansicht, teilgeschnitten, eines Werkzeugs 1 einer vierten Ausführungsform, und
- Fig. 14: eine geschnittene Ansicht eines Werkzeugs einer vierten Ausführungsform.

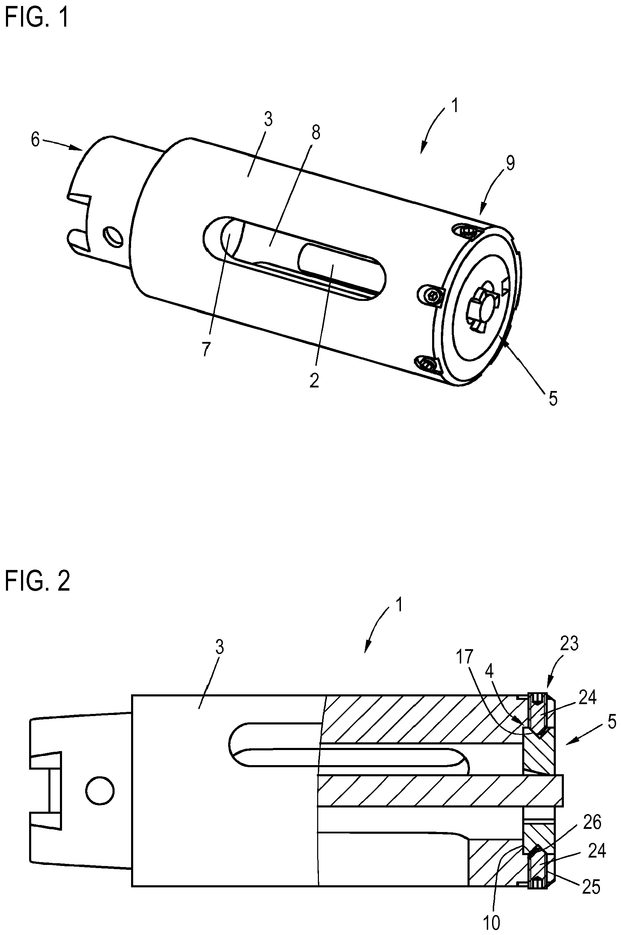

Fig. 1 zeigt ein erfindungsgemäßes Werkzeug 1 zum Bearbeiten eines länglichen Metallgegenstandes 2, der hier exemplarisch in das Werkzeug eingeführt respektive bereits bearbeitet ist. Das Werkzeug 1 weist einen Werkzeughalter 3 mit einer, siehe Fig. 2, topfartigen Schneidwerkzeugaufnahme 4 auf, in der ein Schneidwerkzeug 5 einer ersten Ausführungsform lösbar einsetz- und befestigbar ist bzw. in den Figuren eingesetzt dargestellt ist.

Das Schneidwerkzeug 5 dient zum Überdrehen des Metallgegenstands 2, der axial relativ zum Werkzeug 1 bewegt wird. Exemplarisch wird das Werkzeug 1 über eine entsprechende Schnittstelle 6 mit einem entsprechenden Antrieb gekoppelt, das heißt, dass das Werkzeug 1 rotiert, während in diesem Fall der Metallgegenstand nicht rotiert.

Der Werkzeughalter 3 weist eine ihn axial durchsetzende Bohrung 7 auf, die seitlich über eine Spanaustragsöffnung 8 geöffnet ist, wobei die Spanaustragsöffnung 8 hier in Form eines Längsschlitzes ausgebildet ist. Es können um den Umfang des Werkzeughalters 3 auch mehrere solcher Spanaustragsöffnungen 8 in Form der Längsschlitze vorgesehen sein. Hierüber werden sich beim Überdrehen des Metallgegenstands bildende Späne ausgetragen.

Wie beschrieben wird das Schneidwerkzeug 5 in die Schneidwerkzeugaufnahme 4 eingesetzt und in dieser fixiert. Diese Fixierung geschieht über nachfolgend noch beschriebene Spann- und Justiermittel 9, die am Werkzeughalter 3 und am Schneidwerkzeug 5 vorgesehen sind, worauf nachfolgend im Detail eingegangen wird. Diese Spann- und Justiermittel ermöglichen es, einerseits das Schneidwerkzeug 5 radial exakt innerhalb der Schneidwerkzeugaufnahme 4 justieren zu können, mithin also geringfügig radial verschieben zu können, so dass es exakt konzentrisch zur Längsachse des Werkzeughalters 3, die mit der Rotationsachse zusammenfällt, ausgerichtet werden kann. Die Spann- und Justiermittel 9 ermöglichen es des Weiteren, das ausgerichtete Schneidwerkzeug 5 exakt in dieser Position zu fixieren, indem es axial gegen einen Plattensitz 10, der den Boden der Schneidwerkzeugaufnahme 4 bildet, gespannt werden kann.

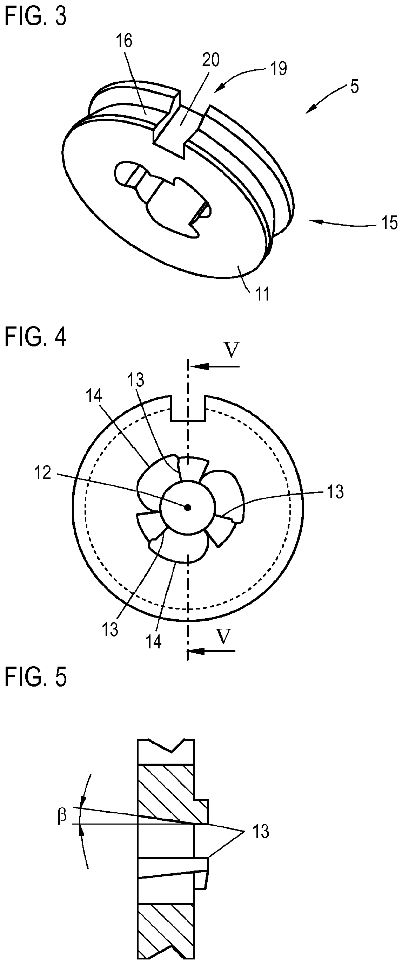

Die Fig. 3 - 6 zeigen ein Schneidwerkzeug 5 einer ersten Ausführungsform. Die folgenden Ausführungen zum Schneidwerkzeug 5 gelten für alle nachfolgend beschriebenen Ausführungsformen der verschiedenen Schneidwerkzeuge 5. Die Schneidwerkzeuge 5 unterscheiden sich lediglich hinsichtlich der Ausbildung eines oder mehrerer Halteabschnitte an ihrem Außenumfang, die, worauf nachfolgend noch eingegangen wird, mit entsprechenden Schraubelementen am Werkzeughalter 3, die dem Justieren und Verspannen dienen, zusammenwirken.

Das Schneidwerkzeug 5 umfasst einen platten- oder scheibenförmigen Werkzeugkörper 11 mit einer zentralen Bohrung 12 und im gezeigten Beispiel mehreren in diese ragenden Schneiden 13. In Umfangsrichtung gesehen ist jeder Schneide 13 ein am Werkzeugkörper 11 ausgebildeter Spanraum 14 (siehe insbesondere Fig. 4) zugeordnet, in dem anfallende Späne aufgenommen und über den sie abgeführt werden können.

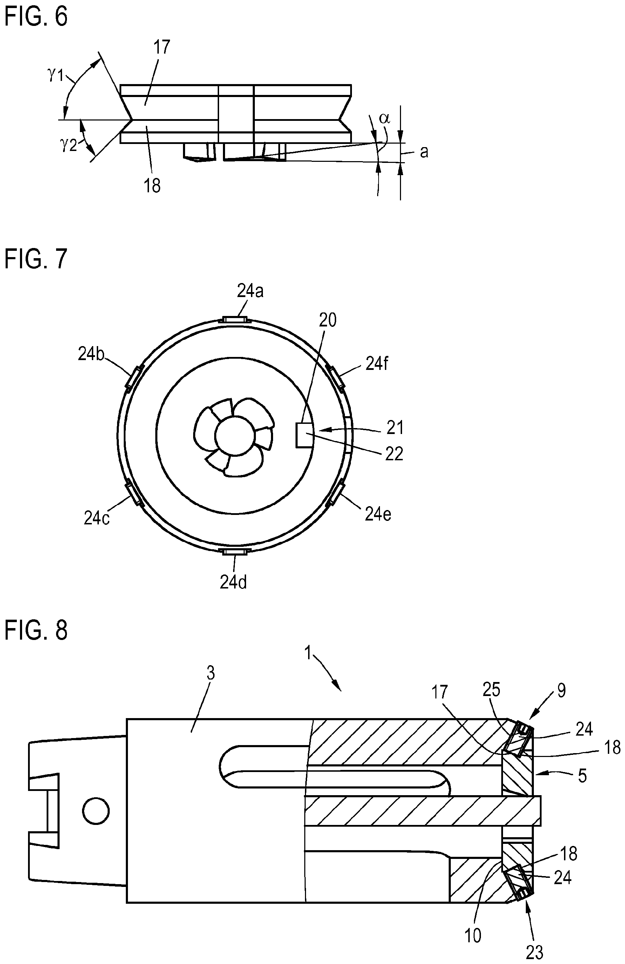

Die Schneiden 13 springen, axial gesehen (siehe Fig. 6) etwas aus dem scheiben- oder plattenförmigen Werkzeugkörper 11 hervor, es ist also ein gewisses Aufmaß a gegeben (siehe Fig. 6), das es in Verbindung mit dem Freiwinkel α an den Schneiden ermöglicht, die Schneiden 13 nachschleifen zu können.

Die Schneiden 13 erstrecken sich (siehe Fig. 5) im Wesentlichen um den vorspringenden Abschnitt, also das Aufmaß a, parallel zur Längsachse des Werkzeugkörpers 11. Anschließend weitet sich jede Schneide 13 geringfügig um den Winkel β auf, siehe Fig. 5. Dieses geringe Aufweiten mit einem Winkel zwischen 0,2° - 1°, vorzugsweise von ca. 0,5°, verhindert ein Verklemmen des Schneidwerkzeugs 5 am Metallgegenstand 2. Das heißt, dass die eigentliche Schneidarbeit im Bereich des parallel zur Zentralachse verlaufenden Schneidenabschnitts, also im Bereich des Aufmaßes a erfolgt.

Diese grundlegenden Merkmale sind bei allen nachfolgend beschriebenen Ausführungsformen des Schneidwerkzeugs 5 vorgesehen.

Jedes Schneidwerkzeug 5 weist des Weiteren mindestens einen Halteabschnitt 15 auf, der zum Zusammenwirken mit am Werkzeughalter 3 vorgesehenen Schraubelementen dient. Der Halteabschnitt 15 sowie die nachfolgend noch beschriebenen Schraubelemente bilden die Spann- und Justiermittel 9.

Bei dem Ausführungsbeispiel gemäß Fig. 3 ist der Halteabschnitt über eine umlaufende Nut 16 gebildet, die über zwei kegelige Flächen 17, 18 begrenzt ist, wie die Schnittansicht gemäß Fig. 6 augenscheinlich zeigt. Die Kegelflächen 17, 18 stehen in einem unterschiedlichen Winkel zur Querschnittsebene des Werkzeugkörpers 11. Der Winkel γ1 ist, siehe Fig. 6, größer als der Winkel γ2. Die Nut 16 ist also als Prismanut ausgeführt. Dies ermöglicht an der kegeligen Fläche 17 über entsprechende Schraubelemente, worauf nachfolgend noch eingegangen wird, eine entsprechende Feineinstellung der Rundlaufgenauigkeit.

Des Weiteren ist am Werkzeugkörper 11 ein Zentrierelement 19 in Form einer Ausnehmung 20 vorgesehen, in die ein entsprechendes Zentrierelement 21 in Form eines am Werkzeughalter 3 ausgebildeten Vorsprungs 22 eingreift, siehe exemplarisch Fig. 7.

Das Schneidwerkzeug 5 wird, wie die Fig. 1 und 2 zeigen, in die Schneidwerkzeugaufnahme 4 eingesetzt. Dort wird es über die Spann- und Justiermittel 9 bezüglich der Zentralachse ausgerichtet und anschließend axial verspannt.

Die Spann- und Justiermittel 9 umfassen hierfür weiterhin entsprechende Schraubelemente 23, hier in Form von Madenschrauben 24, die, siehe Fig. 7, äquidistant um den Umfang des Werkzeugkörpers 3 im Bereich der Schneidwerkzeugaufnahme 4 verteilt angeordnet sind und radial in entsprechenden Innengewindebohrungen 25 am Werkzeughalter 3 verschraubt werden können. Sie weisen entsprechende kegelige Anlaufflächen 26 auf, mit denen sie gegen die Kegelfläche 17 des Schneidwerkzeugs 5 laufen.

Im gezeigten Beispiel sind sechs Madenschrauben 24 vorgesehen, die in Fig. 7 mit 24a - f gekennzeichnet sind. Es sei angenommen, dass die Madenschrauben 24a, 24c und 24e der Justierung dienen, während die Madenschrauben 24b, 24d und 24f dem axialen Verspannen dienen. Beim Einsetzen wird das Schneidwerkzeug zunächst in die Schneidwerkzeugaufnahme 4 eingesetzt, wonach die Madenschrauben 24a - e relativ zum Schneidwerkzeug 5 verschraubt werden. Zunächst kann eine Grundverspannung über wenigstens eine der Madenschrauben 24b, 24d und 24f erfolgen, sie wird leicht gegen die kegelige Fläche 17 verschraubt, so dass das Schneidwerkzeug 5 leicht gegen den Plattensitz 10 axial gespannt wird. Sodann wird über die Madenschrauben 24a, 24c und 24e die radiale Justierung vorgenommen, in dem diese ebenfalls in die Nut 16 eingeschraubt werden. Sie laufen dabei ebenfalls gegen die kegelige Fläche 17, was einerseits eine weitere Axialverspannung, andererseits aber je nachdem, welche der Madenschrauben 24b, 24d und 24f nun weiter verschraubt wird, auch zu einer gewissen Radialverschiebung führt, wobei diese Radialverschiebung zur Justage im Bereich weniger hundertstel bzw. zehntel Millimeter liegt. Die Justierung kann über einen geeigneten Taststift oder dergleichen, also entsprechendes Messwerkzeug, genau erfasst werden. Sobald die Justierung abgeschlossen ist, werden die Spannschrauben 24a, 24c und 24e entsprechend festgezogen, eine weitere Verschiebung findet nicht mehr statt, nachdem das Schneidwerkzeug 5 über die Justierschrauben 24b und 24d und 24f in der ausgerichteten Position fixiert ist.

Sodann kann das Überdrehen des Metallgegenstands 2 beginnen, wozu dieser beispielsweise axial relativ zum rotierenden Werkzeug 1 verschoben wird.

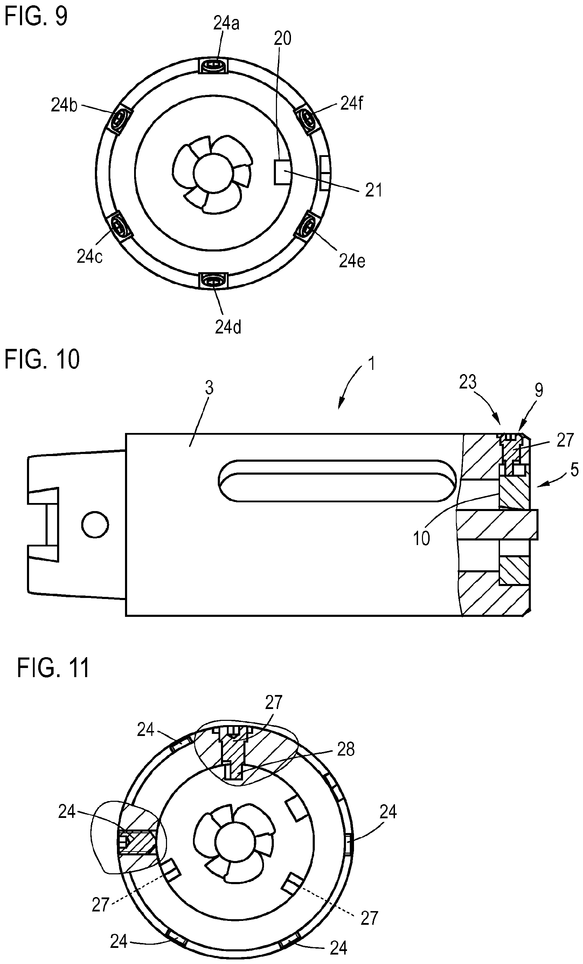

Die Fig. 8 und 9 zeigen eine weitere Ausführungsform eines erfindungsgemäßen Werkzeugs 1, wobei für gleiche Bauteile gleiche Bezugszeichen verwendet werden. Der Werkzeugkörper entspricht dem, wie zu den vorstehenden Figuren beschrieben. Anders sind hier jedoch die Justier- und Spannmittel 9.

Wie der Schnittansicht zu entnehmen ist, weist das Schneidwerkzeug 5 ebenfalls eine umlaufende Nut 16 auf, die wiederum als Prismanut ausgeführt ist und über die kegeligen Flächen 17, 18 begrenzt ist.

Die Spannmittel 9 umfassen ferner auch hier Schraubelemente 23, wiederum in Form von Madenschrauben 24, die auch hier, siehe Fig. 9, äquidistant um den Umfang verteilt am Werkzeughalter 3 angeordnet sind und in entsprechenden Innengewindebohrungen 25 verschraubt werden können. Die Innengewindebohrungen stehen hier jedoch unter einem Winkel zur Zentralachse ungleich 90°, verlaufen also, anders als in Fig. 2, nicht senkrecht. Sie werden zum Justieren und Verspannen ebenfalls gegen die kegelige Fläche 17 verschraubt, wie Fig. 8 anschaulich zeigt.

Auch hier können beispielsweise die Madenschrauben 24a, 24c und 24e dem Vor- und Festspannen dienen, während die Madenschrauben 24b, 24d und 24f der Justierung durch radiales Verschieben dienen können.

Eine weitere Ausgestaltung eines erfindungsgemäßen Werkzeugs 1 zeigen die Fig. 10 und 11, wobei Fig. 10 wiederum eine teilgeschnittene Seitenansicht des Werkzeugs 1 zeigt, während Fig. 11 eine Stirnansicht zeigt.

Auch hier ist das Schneidwerkzeug 5 bereits in die Schneidwerkzeugaufnahme 4 eingesetzt und gegen den Plattensitz 10 angelegt.

Die Spann- und Justiermittel 9 umfassen auch hier eine Reihe von Schraubelementen 23, die jedoch nicht einheitlich als Madenschrauben ausgeführt sind, sondern von denen exemplarisch drei Schraubelemente 23 als Exzenterschrauben 27 ausgeführt sind, die einen entsprechenden exzentrisch angeordneten Spannzapfen 28 aufweisen. In Fig. 11 ist in der teilgeschnittenen Ansicht eine Exzenterschraube 27 gezeigt, die beiden anderen Exzenterschrauben 27 sind in ihrer Position angedeutet.

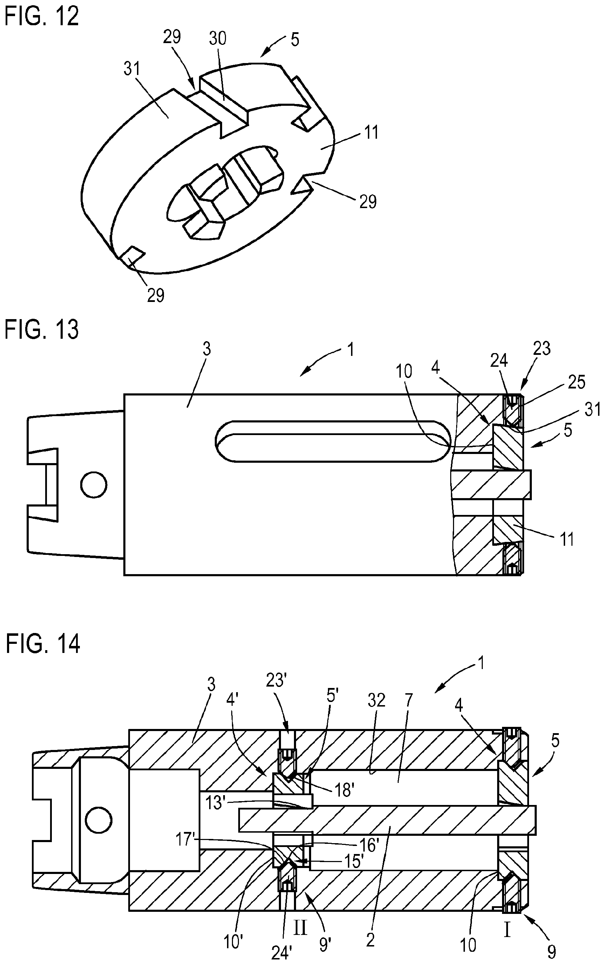

Jeder Exzenterschraube 27 ist am Schneidwerkzeug 5, siehe die Perspektivansicht gemäß Fig. 12, eine schräg zu der Längsachse verlaufende Eintiefung 29, also eine Längsnut, die schräg verläuft, zugeordnet, in die der Spannzapfen 28 jeder Exzenterschraube 27 eingreift. Wird die Exzenterschraube 27 verdreht, so läuft der Spannzapfen 28 gegen die schräg verlaufende Spannfläche 30 der jeweiligen nutartigen Eintiefung 29, worüber das axiale Verspannen gegen den Plattensitz 10 erfolgt.

Ferner sind als dem Justieren dienende Schraubelemente 23 Madenschrauben 24 vorgesehen, die um den Umfang verteilt angeordnet sind, und die gegen die hier zylindrische Mantelfläche 31 des Werkzeugkörpers 11 geschraubt werden, um die Radialverschiebung zu erwirken.

Die Funktion ist auch hier derart, dass über wenigstens eine Exzenterschraube 27 zuerst eine leichte Vorspannung erfolgt, wonach die eigentliche Justierung über die Madenschrauben 24 vorgenommen wird, wonach über die Exzenterschrauben die endgültige Axialverspannung erfolgt.

Fig. 13 zeigt ein viertes Ausführungsbeispiel eines erfindungsgemäßen Werkzeugs 1 mit einem Werkzeugkörper 3 und einer Schneidwerkzeugaufnahme 4 mit einem Plattensitz 10, an dem auch hier bereits das Schneidwerkzeug 5 anliegt. Das Schneidwerkzeug 5 weist hier am Werkzeugkörper 11 eine kegelige Mantelfläche 31 auf, wobei sich die Kegelform zum Plattensitz 10 hin erweitert. An dem Werkzeughalter 3 sind auch hier entsprechende Innengewindebohrungen 25 vorgesehen, in die die Schraubelemente 23, auch hier Madenschrauben 24, radial eingeschraubt werden. Sie laufen gegen die kegelige Mantelfläche 31. Aufgrund der Kegelform kommt es zu einer Axialverspannung gegen den Plattensitz 10, gleichzeitig kann hierüber aber auch bei nur leichter axialer Vorspannung eine minimale radiale Justierung vorgenommen werden.

Fig. 14 zeigt schließlich eine Ausführungsform eines Werkzeugs 1, das quasi als zweistufiges Werkzeug ausgeführt ist und zwei axial versetzt zueinander liegende Schneidebenen I, II aufweist. Es weist eine erste Schneidwerkzeugaufnahme 4 auf, die am Eingang des Werkzeughalters 3 ausgebildet ist, wie bei den vorstehend beschriebenen Ausführungsformen. In diese ist ein erstes Schneidwerkzeug 5 eingesetzt, das exemplarisch dem gemäß Fig. 2 entspricht. Es ist gegen den entsprechenden Plattensitz 10 axial verspannt und ausgerichtet, wozu die entsprechenden Spann- und Justiermittel 9 in der vorstehend beschriebenen Ausgestaltung und Funktion dienen. Selbstverständlich kann hier exemplarisch auch jede andere Ausgestaltung der Schneidwerkzeuge 5 und Spann -und Justiermittel 9, wie vorstehend beschrieben, vorgesehen sein. Hierüber wird also eine erste Schneidebene I definiert.

Im Inneren des Werkzeugkörpers 3 ist eine zweite Schneidebene II realisiert. Dort ist eine zweite Schneidwerkzeugaufnahme 4' mit einem zweiten Plattensitz 10' vorgesehen. In der Schneidwerkzeugaufnahme 4' ist ein zweites Schneidwerkzeug 5' aufgenommen. Der Außendurchmesser des Schneidwerkzeugs 5' ist geringfügig kleiner als der Innendurchmesser des Abschnitts 32 der Bohrung 7, die den Werkzeughalter 3 durchsetzt, so dass das Schneidwerkzeug 5' axial eingeschoben werden kann.

Das zweite Schneidwerkzeug 5' entspricht einer der vorstehend beschriebenen Ausgestaltungen, es ist lediglich im Außendurchmesser etwas kleiner. Auch der Schneiddurchmesser, definiert über die Schneiden 13' ist naturgemäß ist etwas kleiner als der des ersten Schneidwerkzeugs 5, da hierüber eine zweite Überdrehstufe realisiert werden soll, so dass der fertig bearbeitete Metallgegenstand 2 einen ersten überdrehten Abschnitt mit kleinerem Durchmesser, realisiert in der zweiten Schneidebene II, und einen zweiten Abschnitt größeren Durchmessers, realisiert in der ersten Schneidebene I, aufweist.

Auch hier sind entsprechende Spann- und Justiermittel 9' vorgesehen, die wiederum eine entsprechende Ausgestaltung eines Halteabschnitts 15', auch hier in Form einer radial umlaufenden Nut 16', die über zwei kegelige Flächen 17', 18' begrenzt ist, vorgesehen, das heißt, dass exemplarisch auch hier das zweite Schneidelement 5' vom Grundaufbau dem ersten Schneidelement 5 entspricht.

Die Spann- und Justiermittel 9' umfassen des weiteren entsprechende Schraubelemente 23', auch hier wiederum in Form entsprechender Madenschrauben 24', von denen wiederum beispielsweise sechs äquidistant um den Umfang des Werkzeugkörpers 3 verteilt angeordnet sein können.

Die Funktion ist hier identisch wie in der ersten Schneidebene. Auch hier wird über zumindest eine der zum Vorspannen vorgesehenen Madenschrauben 24' das Schneidwerkzeug 5' leicht axial vorgespannt, anschließend erfolgt über die der Justierung dienenden Madenschrauben 24' die exakte Ausrichtung zur Zentralachse, wonach über die entsprechenden Madenschrauben 24' die Festspannung erfolgt.

Wenngleich auch hier das Schneidwerkzeug 5' und die Spann- und Justiermittel 9' entsprechend denen der ersten Schneidebene I ausgeführt sind, ist es auch hier selbstverständlich möglich, ein Schneidwerkzeug und Spann- und Justiermittel, wie sie in den anderen Ausführungsformen beschrieben sind, vorzusehen.

## Patentansprüche

1. Werkzeug zum Bearbeiten länglicher Metallgegenstände (2) durch spanabhebendes Überdrehen, **gekennzeichnet durch** einen Werkzeughalter (3) mit einer Schneidwerkzeugaufnahme (4) und ein darin lösbar einsetz- und befestigbares Schneidwerkzeug (5) mit einem plattenförmigen Werkzeugkörper (11) mit einer zentralen Bohrung (12) und wenigstens einer in diese ragenden Schneide (13), wobei am Werkzeughalter (3) und am Schneidwerkzeug (5) zusammenwirkende Spann- und Justiermittel (9) zum axialen Spannen des Schneidwerkzeugs (5) gegen einen in der Schneidwerkzeugaufnahme (4) vorgesehenen Plattensitz (10) und zum Justieren des Schneidwerkzeugs (5) durch radiales Verschieben des Schneidwerkzeugs (5) relativ zum Werkzeughalter (3) vorgesehen sind.

2. Werkzeug nach Anspruch 1, **dadurch gekennzeichnet, dass** der eine Axialbohrung (7) aufweisende Werkzeughalter (3) eine axial versetzt in seinem Inneren vorgesehene zweite Schneidwerkzeugaufnahme (4') und ein darin lösbar einsetz- und befestigbares zweites Schneidwerkzeug (5') mit einem plattenförmigen Werkzeugkörper mit einer zentralen Bohrung und wenigstens einer in diese ragenden Schneide (13') mit einem verglichen mit den ersten Schneidwerkzeug (5) kleineren Schneidradius aufweist, wobei am Werkzeughalter (3) und am zweiten Schneidwerkzeug (5') zusammenwirkende zweite Spann- und Justiermittel (9') zum axialen Spannen des zweiten Schneidwerkzeugs (5') gegen einen in der zweiten Schneidwerkzeugaufnahme (4') vorgesehenen zweiten Plattensitz (10') und zum Justieren des zweiten Schneidwerkzeugs (5') durch radiales Verschieben des zweiten Schneidwerkzeugs (5') relativ zum Werkzeughalter (3) vorgesehen sind.

3. Werkzeug nach Anspruch 1 oder 2, **dadurch gekennzeichnet, dass** am Werkzeughalter (3) wenigstens eine seitliche Spanaustragöffnung (8) vorgesehen ist.

4. Werkzeug nach Anspruch 3, **dadurch gekennzeichnet, dass** der Werkzeughalter (3) eine axial durchgehende Bohrung (7) aufweist, die über die wenigstens eine seitliche, insbesondere als Längsschlitz ausgeführte, Spanaustragsöffnung (8) seitlich offen ist.

5. Werkzeug nach einem der vorangehenden Ansprüche, **dadurch gekennzeichnet, dass** die ersten und/oder die zweiten Spann- und Justiermittel (9,9') mehrere um den Umfang des Werkzeughalters (3) verteilt angeordnete Schraubelemente (23, 23') sowie einen oder mehrere am ersten und/oder zweiten Schneidwerkzeug (5, 5') vorgesehene, mit den Schraubelementen (23, 23') zusammenwirkende Halteabschnitte (15, 15') umfassen.

6. Werkzeug nach Anspruch 5, **dadurch gekennzeichnet, dass** ein Halteabschnitt (15, 15') in Form einer umlaufenden, wenigstens eine kegelige Fläche (17, 17'), gegen die die Schraubelemente (23) bewegt werden, aufweisenden Nut (16), insbesondere einer über zwei kegelige Flächen (17, 17', 18, 18') begrenzten Prismanut, vorgesehen ist.

7. Werkzeug nach Anspruch 5, **dadurch gekennzeichnet, dass** der Halteabschnitt (15, 15') über eine kegelige umlaufende Mantelfläche (31) des Schneidwerkzeugs (5, 5') gebildet ist, oder dass die Halteabschnitte (15, 15') über lokale, wenigstens eine Schrägfläche aufweisende Eintiefungen gebildet sind.

8. Werkzeug nach einem der Ansprüche 5 bis 7, **dadurch gekennzeichnet, dass** die Schraubelemente (23, 23') Schrauben, insbesondere Madenschrauben (24, 24a, 24b, 24c, 24d, 24e, 24f, 24') sind.

9. Werkzeug nach Anspruch 5, **dadurch gekennzeichnet, dass** die Halteabschnitte (15, 15') über lokale Eintiefungen (29) mit wenigstens einer Anlagefläche für das als Exzenterschraube (27) ausgebildete Schraubelement (23, 23') gebildet sind, wobei gegebenenfalls zusätzlich Halteabschnitte in Form lokaler Eintiefungen vorgesehen sind, in die der Justierung dienende Schraubelemente (23, 23') eingreifen.

10. Werkzeug nach einem der vorangehenden Ansprüche, **dadurch gekennzeichnet, dass** die oder jede Schneide (13, 13') einen ersten achsparallelen Schneidabschnitt aufweist, der in einen schräg zur Achse verlaufenden, insbesondere unter einem Winkel zwischen 0,2 - 1° zur Achse stehenden, zweiten Schneidabschnitt übergeht.

11. Werkzeug nach einem der vorangehenden Ansprüche, **dadurch gekennzeichnet, dass** das erste und/oder das zweite Schneidwerkzeug (5, 5') mehrere um den Umfang der zentralen Bohrung (12) verteilt angeordnete Schneiden (13, 13') aufweist.

12. Werkzeug nach einem der vorangehenden Ansprüche, **dadurch gekennzeichnet, dass** in Umfangsrichtung der oder jeder Schneide (13, 13') ein am Werkzeugkörper (11) ausgebildeter Spanraum (14) zugeordnet ist.

13. Werkzeug nach einem der vorangehenden Ansprüche, **dadurch gekennzeichnet, dass** am Werkzeughalter (3) wenigstens ein erstes Zentierelement (21) und am Werkzeugkörper (11) wenigstens ein zweites Zentrierelement (19) für eine umfangsmäßige Zentrierung des Schneidwerkzeugs (5, 5') relativ zum Werkzeughalter (3) vorgesehen ist.

14. Werkzeug nach Anspruch 13, **dadurch gekennzeichnet, dass** das erste Zentrierelement (21) als radial in die Schneidwerkzeugaufnahme (4, 4') ragender Vorsprung (22) und das zweite Zentrierelement (19) als diese aufnehmende Ausnehmung (20) ausgebildet ist, oder umgekehrt.

15. Schneidwerkzeug für ein Werkzeug (1) nach einem der vorangehenden Ansprüche, mit einem plattenförmigen Werkzeugkörper (11) mit einer zentralen Bohrung (12) und wenigstens einer in diese ragenden Schneide (13, 13'), sowie mit einem oder mehreren umfangsseitig am Werkzeugkörper (11) ausgebildeten Halteabschnitten (15, 15') zum Zusammenwirken mit externen schraubenförmigen Spann- und Justiermitteln (9, 9') zum axialen Spannen und radialen Verschieben relativ zu einem Werkzeughalter (3).

16. Schneidwerkzeug nach Anspruch 15, **dadurch gekennzeichnet, dass** ein Halteabschnitt (15, 15') in Form einer umlaufenden, wenigstens eine kegelige Fläche (17, 17'), gegen die die Schraubelemente (23, 23') bewegt werden, aufweisenden Nut (16, 16'), insbesondere einer über zwei kegelige Flächen (17, 17', 18, 18') begrenzten Prismanut, vorgesehen ist.

17. Schneidwerkzeug nach Anspruch 15, **dadurch gekennzeichnet, dass** der Halteabschnitt (15, 15') über eine kegelige umlaufende Mantelfläche (31) des Schneidwerkzeugs (5, 5') gebildet ist, oder dass die Halteabschnitte über lokale, wenigstens eine Schrägfläche aufweisende Eintiefungen gebildet sind.

18. Schneidwerkzeug nach Anspruch 15, **dadurch gekennzeichnet, dass** die Halteabschnitte (15, 15') über lokale Eintiefungen (29) mit wenigstens einer Anlagefläche für das als Exzenterschraube (27) ausgebildete Schraubelement (23) gebildet sind, wobei gegebenenfalls zusätzlich Halteabschnitte in Form lokaler Eintiefungen vorgesehen sind, in die der Justierung dienende Schraubelemente (23) eingreifen.

19. Schneidwerkzeug nach einem der Ansprüche 15 bis 18, **dadurch gekennzeichnet, dass** die oder jede Schneide (13, 13') einen ersten achsparallelen Schneidabschnitt aufweist, der in eine schräg zur Achse verlaufenden, insbesondere unter einem Winkel zwischen 0,2 - 1° zur Achse stehenden, zweiten Schneidabschnitt übergeht.

20. Schneidwerkzeug nach einem der Ansprüche 15 bis 19, **dadurch gekennzeichnet, dass** das erste und/oder das zweite Schneidwerkzeug (5, 5') mehrere um den Umfang der zentralen Bohrung (12) verteilt angeordnete Schneiden (13, 13') aufweist.

21. Schneidwerkzeug nach einem der Ansprüche 15 bis 20, **dadurch gekennzeichnet, dass** in Umfangsrichtung der oder jeder Schneide (13, 13') ein am Werkzeugkörper (11) ausgebildeter Spanraum (14) zugeordnet ist.

22. Schneidwerkzeug nach einem der Ansprüche 15 bis 21, **dadurch gekennzeichnet, dass** am Werkzeughalter (11) wenigstens ein zweites Zentrierelement (19) zum Zusammenwirken mit wenigstens einem am Werkzeughalter (3) vorgesehenen ersten Zentierelement (21) für eine umfangsmäßige Zentrierung des Schneidwerkzeugs (5, 5') relativ zum Werkzeughalter (3) vorgesehen ist.

23. Schneidwerkzeug nach Anspruch 22, **dadurch gekennzeichnet, dass** das zweite Zentrierelement (19) als eine einen radial in die Schneidwerkzeugaufnahme (4, 4') ragenden, das erste Zentrierelement (21) bildenden Vorsprung (22) aufnehmende Aufnahme (20) oder als radial vom Werkzeugkörper abstehender Vorsprung zum Eingreifen in eine das erste Zentrierelement bildende Aufnahme ausgeführt ist.
